# EUROPEAN PATENT APPLICATION

(11) **EP 1 431 526 A1**
(43) Date of publication of application: **23.06.2004**
(21) Application number: 02028746.2
(22) Date of filing: 20.12.2002
(51) Int. Cl.: F01L 9/04, F01L 9/02, F01L 1/34, F02D 13/02

(54) **Method for controlling an intake phase of an internal combustion engine**

(71) Applicant: Ford Global Technologies, Inc., Dearborn, Michigan 48126 (US)
(72) Inventor: Otterspeer, Rob, 41308 Göteborg (SE); Karlsson, Jan, 42166 Västra Frölunda (SE)
(74) Representative: Spitmann, Knut Hermann

(57) **Abstract**

The invention relates to a method for controlling an intake phase of an internal combustion engine comprising at least one piston arranged for reciprocal motion between a top dead center (TDC) and a bottom dead center (BDC) in a cylinder of the engine, said method comprising the steps of
controlling an intake valve of said cylinder to be open for a first time interval including a period during which said piston moves in a range after TDC in order to admit some fluid into said cylinder,
controlling said intake valve to be substantially closed for a second time interval succeeding the first time interval in order to obtain an underpressure in said cylinder, and
controlling said intake valve to be opened after said second time interval and before said piston reaches BDC in order to admit additional fluid into said cylinder.

An advantage of the inventive method is that the volumetric efficiency of the engine can be increased since more air or air/fuel mixture can be charged into the cylinder.

## Description

The present invention relates to a method for controlling an intake phase of an internal combustion engine comprising at least one piston arranged for reciprocal motion between a top dead center (TDC) and a bottom dead center (BDC) in a cylinder of the engine.

### BACKGROUND

The reciprocal movement of a piston in an internal combustion engine is limited by a top dead center (TDC) at which the piston is in its highest position, and a bottom dead center (BDC) at which the piston is in its lowest position (closest to the crank shaft). Piston movement between TDC and BDC define a stroke of the piston. During an intake phase of a conventional four-stroke internal combustion engine the intake valves of the engine are open during a time period substantially extending from TDC to BDC. It is commonly occurring that an intake valve is deliberately opened shortly after or shortly before the corresponding piston reaches TDC, generating an overlap between intake valves and exhaust valves. Intake valves can also be closed shortly before or shortly after the piston reaches BDC.

The volumetric efficiency of an internal combustion engine is dependent on the quantity of air or air/fuel mixture charged into the cylinders during the intake phase. Actually, the volumetric efficiency can be defined as the air charge divided by the swept volume. The air charge in an engine can be increased by super-charging, for example by means of a turbo or, as in DE 3737824, by adopting a technique of creating a vacuum in the cylinders which vacuum is then released resulting in a quick filling with a large quantity of air. DE 3737824 discloses a method for operating an internal combustion engine with an additional throttle provided in the inlet duct. The additional throttle is closed during a first part of the intake phase so that a vacuum is created in the current cylinder. Opening the additional valve during a subsequent part of the intake phase results in a large massflow into the cylinder. According to DE 3737824 the additional throttle can also be operated according to an open-close-open scheme during an intake phase, while the engine inlet valve is open during the entire intake phase of the cylinder. The inlet valve is operated conventionally by a camshaft. There is room for improvements of this method regarding knock sensitivity, cost reduction, control and precision of the vacuum build up. For example, the space between the inlet valve of the engine and the additional throttle in the inlet duct represent an inertia and a flow resistance to the massflow in the inlet duct.

### SUMMARY OF THE INVENTION

An object of present invention is to provide a more efficient and reliable method for controlling an intake phase of an internal combustion engine. Another object of the inventive method is to increase the volumetric efficiency of the engine which is advantageous from aspects such as engine output torque, fuel economy, and reduced emissions.

According to the present invention these objects are achieved by applying a method for controlling an intake phase of an internal combustion engine comprising at least one piston arranged for reciprocal motion between a top dead center (TDC) and a bottom dead center (BDC) in a cylinder of the engine, said method comprising the steps of:
- controlling an intake valve of said cylinder to be open for a first time interval including a period during which said piston moves in a range after TDC in order to admit some fluid into said cylinder,
- controlling said intake valve to be substantially closed for a second time interval succeeding the first time interval in order to obtain an underpressure in said cylinder, and
- controlling said intake valve to be opened after said second time interval and before said piston reaches BDC in order to admit additional fluid into said cylinder.

The working cycle of a piston in a four stroke internal combustion engine includes the strokes: compression (and ignition), expansion, expulsion, and induction. The induction stroke is a piston movement from TDC to BDC during which air is charged into the cylinder. The intake valves of the cylinder are usually open during most part of this movement.

In this context, however, an intake phase of an internal combustion engine to a large extent coincides with the induction stroke but the intake phase may start before, at, or after the piston reaches TDC of the stroke and it may end before, at, or after the piston reaches BDC of the stroke. The intake phase can be considered to start when a corresponding intake valve is first opened and to end when the corresponding intake valve is finally closed.

During an intake phase the first opening of the intake valve can start before, at, or after TDC while the final closing of the intake valve can take place before, at, or after BDC depending on the engines operational conditions by hand.

Preferebly, the inventive method is performed on a camless internal combustion engine in which the intake valves are controlled by an electronic valve control unit. Intake valves can for example be operated by electromagnetic, hydraulic, pneumatic, or piezoelectric valve actuators which are controlled by said valve control unit. The fully variable valve systems provide several advantages, for example reduced weight (extra throttle and camshaft not needed), reduced cost, size, as well as reduced pressure losses during operation.

An engine in which the invention is used is preferably provided with a cylinder head in which the intake valves are located. Said engine is preferably a multicylinder engine that comprises two intake valves for each cylinder wherein all the intake valves are controlled by said control unit according to the present open-close-open scheme. The open-close-open scheme for controlling intake valves is also referred to as a "double lift" method.

A camless engine provides a possibility for valve timing independently of mechanical drives between the crank shaft and the intake valves. In an engine provided with an electronic valve control system a control unit preferably has access to information on piston positions (crank angle), engine speed, and load. Time periods for opening and closing the intake valve can then be optimised for the current load and engine speed.

Geometry of the intake manifold and inlet ducts is preferably also taken into consideration. Once the underpressure is obtained in the cylinder and the intake valves are opened for the second time an underpressure wave starts moving in the inlet duct in the direction towards an inlet plenum of the engine. As the underpressure wave reaches the inlet plenum it is reflected under a sign change which means that an overpressure wave will start moving back towards the intake valve and the cylinder. The intake valve is preferably kept open during this pressure wave movement so that when the pressure wave reaches the intake valve after the reflection, it will contribute to the filling of the cylinder. In order for the pressure wave to result in a super-charging of the cylinder the tuning of the valve timing is performed with respect to inlet duct length and the speed of sound at present pressure and temperature. Especially, the second intake valve lift in the double lift method and the final closing of the intake valve would be tuned to finish the intake phase when the pressure wave has reached the cylinder and contributed as desired to the charging of the cylinder. Preferably, the final closing of the intake valve during an intake phase takes place when the piston is located at or close to BDC so that the swept volume of the cylinder is exploited to a large extent.

In the present double lift method, the tuning of the first opening and closing of the intake valve is preferably performed so as to obtain enough underpressure required by torque demand and still not to result in a too high knock sensitivity or a too heavy underpressure work of the piston. In this way the underpressure build up can be controlled.

The present double lift method does not necessarily mean that the intake valve must be completely closed between the two open periods. As long as good enough underpressure is created by the piston movement in the cylinder, the intake valve may as well be just almost closed but still admitting a little airflow into the cylinder.

The inventive method is preferably used in naturally aspirated internal combustion engines. It can also be used in turbo charged internal combustion engines where the inventive method will be especially advantageous at relatively low engine speeds where the turbo charging is limited or in situations where the turbo responsiveness limits engine output torque.

### BRIEF DESCRIPTION OF THE DRAWINGS

Figure 1 shows a cylinder with a piston located at TDC plus a small crank angle α and an open intake valve.
Figure 2 shows a cylinder with a piston located between TDC and BDC (at TDC plus a crank angle β) and a closed intake valve.
Figure 3 shows a cylinder with a piston located close to BDC and an open intake valve.
Figure 4 is a schematic graph that indicates how an intake valve is opened and closed according to an embodiment of the invention.

### DETAILED DESCRIPTION OF A PREFERRED EMBODIMENT

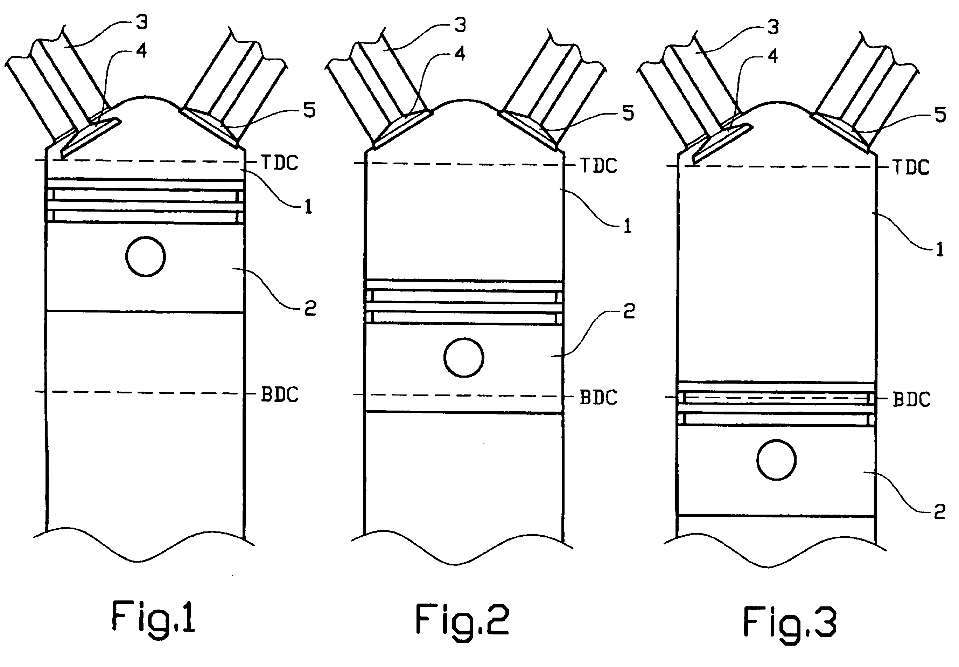

Figure 1 shows a cylinder 1 of an internal combustion engine, a piston 2 arranged for reciprocation inside the cylinder 1, and an inlet duct 3 communicating with the cylinder 1 via an intake valve 4 arranged immediately adjacent to the cylinder 1. An exhaust valve 5 is provided for expelling exhaust from the cylinder to an exhaust pipe (not shown).

Before the intake phase starts the intake valve 4 is closed and the position of the exhaust valve 5 is free for optimization of EGR-amounts (Exhaust Gas Recirculation). The intake phase preferably starts with opening the intake valve 4 for a short time interval including the crank angle TDC+α. This interval can range from just a few degrees to almost the stroke of the piston 2.

Then, as shown in Figure 2, the intake valve 4 is closed for a time interval including the crank angle TDC+β. This period can also range from just a few degrees to almost the stroke of the piston 2. Now vacuum or underpressure is generated in the cylinder 1. The amount of fluid admitted into the cylinder 1 during the interval including the crank angle TDC+α and the volumetric displacement during the succeeding interval including the crank angle TDC+β together determines the level of vacuum generated. The fluid admitted into the cylinder 1 preferably consists of air or air/fuel mixture.

During the opening of the intake valve 4 (Figure 3) at a crank angle after TDC+β the vacuum in the cylinder 1 starts a pressure wave in the inlet duct 3. The timing can be performed so that a return pressure wave will increase the pressure in the cylinder 1 to a maximum value at the point of a final closing (during present intake phase) of the intake valve 4, which point is located at or near BDC.

In this way the open-close-open points of the intake valve can be tuned such that the pressure wave reaches the cylinder before said final closing of the intake valve takes place. The timing of the open-close-open time intervals are preferably tuned such that said pressure wave maximises the charging of said cylinder. Therefore, the final closing of the intake valve is controlled to take place while the pressure wave remains in the cylinder.

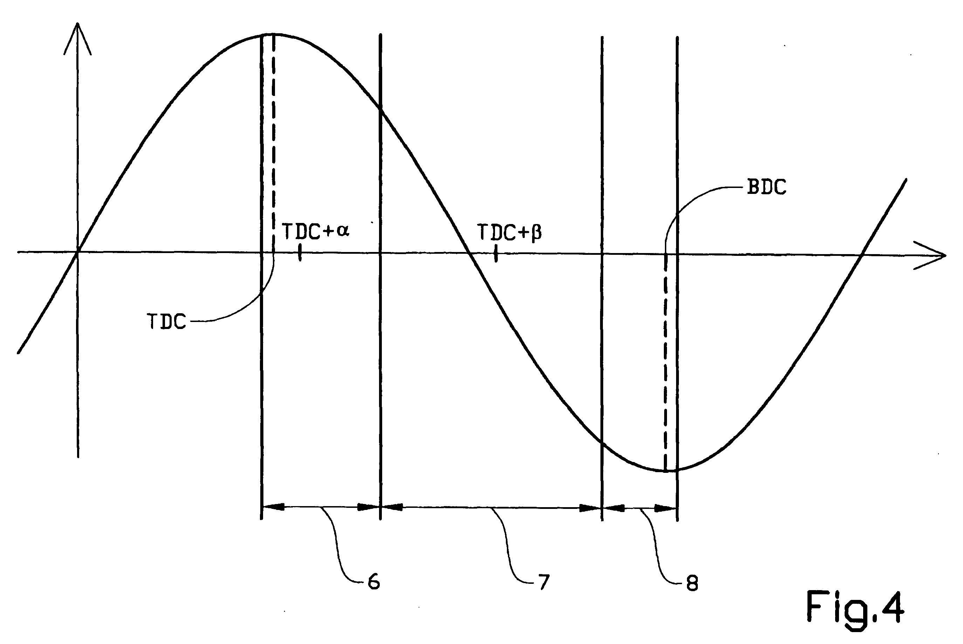

Figure 4 shows how the time periods for open and closed intake valves can be chosen. The horisontal axis represents the crank angle of the engine and the vertical axis represents the position of a piston 2. Tops and bottoms of the curve represent TDC and BDC, respectively. During the first time period 6 the intake valve 4 is open, during the second time period 7 it is closed, and during a third time period 8 at or close to BDC the intake valve 4 is open again. Fully variable valve timing systems, e.g. electronic valve control, as described above are advantageous in this context and such systems provide a possibilty to choose and continuously adapt the time periods 6, 7, 8 of Figure 4 for engine optimisation based on instantaneous engine parameters such as load and engine speed as well as on inlet duct length and geometry.

Engine tests have shown that creating a vacuum in the cylinders during the intake phase can increase the volumetric efficiency by approximately 10%. In the present inventive double lift method the period including TDC+α can be adapted to induct exactly the correct amount of air or air/fuel mixture so that during the period including TDC+β expansion with the intake valve closed is performed and still the pressure does not drop to too low values. This reduces the knock sensitivity of the engine.

The invention is not limited to the embodiment described, but can be modified within the scope of the appended claims.

## Claims

1. A method for controlling an intake phase of an internal combustion engine comprising at least one piston (2) arranged for reciprocal motion between a top dead center (TDC) and a bottom dead center (BDC) in a cylinder (1) of the engine, said method comprising the steps of:
- controlling an intake valve (4) of said cylinder to be open for a first time interval (6) including a period during which said piston moves in a range after TDC in order to admit some fluid into said cylinder (1),
- controlling said intake valve (4) to be substantially closed for a second time interval (7) succeeding the first time interval (6) in order to obtain an underpressure in said cylinder (1), and
- controlling said intake valve (4) to be opened after said second time interval (7) and before said piston reaches BDC in order to admit additional fluid into said cylinder.

2. A method according to claim 1 **characterised in** controlling said intake valve (4) by means of a valve control unit receiving data of the rotational position of a crankshaft of said engine.

3. A method according to claim 2 wherein said engine is a multicylinder engine with at least one intake valve (4) for each cylinder (1) **characterised in that** all intake valves (4) of said engine are controlled by said valve control unit.

4. A method according to claim 3 **characterised in that** the intake valves (4) are operated by valve actuators controlled by said valve control unit.

5. A method according to claim 4 **characterised in that** the intake valves (4) are operated by electromagnetic actuators, hydraulic actuators, pneumatic actuators, or piezoelectric actuators.

6. A method according to any one of the preceding claims, **characterised in that** in an inlet duct (3) of the engine a pressure wave is generated by said opening of said intake valve (4) after said second time interval (7).

7. A method according to claim 6 **characterised in that** said time intervals are tuned such that the pressure wave reaches said cylinder (1) before a final closing of said intake valve (4).

8. A method according to claim 6 or 7 **characterised in that** said time intervals are tuned such that said pressure wave maximises the charging of said cylinder (1).

9. A method according to claim 7 or 8 **characterised in** finally closing said intake valve (4) while the pressure wave remains in the cylinder (1), thereby maximising the charge of said cylinder (1).

10. A method according to claim any one of the preceding claims **characterised in that** said time intervals are tuned to control the underpressure generated in said cylinder (1).
